# EUROPÄISCHE PATENTSCHRIFT

(11) **EP 2 730 177 B1**
(45) Veröffentlichungstag und Bekanntmachung des Hinweises auf die Patenterteilung: **08.07.2015**
(21) Anmeldenummer: 13005238.4
(22) Anmeldetag: 06.11.2013
(51) Int. Cl.: A23L 1/275

(54) **Verfahren zur Behandlung von Eiern**
Method for treating eggs
Procédé de traitement d'oeufs

(30) Priorität: 09.11.2012 DE 102012021911
(43) Veröffentlichungstag der Anmeldung: 14.05.2014
(73) Patentinhaber: Brauns-Heitmann GmbH & Co. KG, 34414 Warburg (DE)
(72) Erfinder: Dr. Uwe Gibbels, 34414 Warburg (DE); Katja Füser, 59602 Rüthen (DE); Maria Wieczorek, 34434 Borgenstreich (DE)
(74) Vertreter: Geskes, Christoph

(56) Entgegenhaltungen:
- EP-A2- 2 289 349
- DE-A1- 4 416 568
- US-A- 4 853 240

## Beschreibung

Die vorliegende Erfindung betrifft ein Verfahren zur Behandlung von Eiern, als auch ein System zur Durchführung des erfindungsgemäßen Verfahrens.

Aus der DE 44 16 568 A1 ist ein Verfahren zum Färben von Eiern mittels Farbstoffen bekannt, wobei vorzugsweise Naturfarbstoffe eingesetzt werden. Bei diesem Verfahren können jeweils Eier in einem anderen Farbton gleichzeitig gefärbt werden. Das Verfahren zeichnet sich dadurch aus, dass jeweils in ein Behältnis eine Wassermenge gefüllt wird, die die Zahl der mit dem vorgegebenen Farbton zu färbenden Eier überdeckt, dass jeweils in das Behältnis der gewünschte Farbstoff und die zu färbenden Eier gegeben werden, dass die gefüllten Behältnisse in einem Bad mit einer siedenden Flüssigkeit, vorzugsweise Wasser, über einen vorgebbaren Zeitraum erhitzt werden und dass die Behältnisse nach Ablauf der Erhitzungszeit abgekühlt werden. Hierdurch können auch einzelne Eier jeweils in einem anderen Farbton gleichzeitig und somit energiesparend gefärbt werden. Auch eine Anfärbung einer Innenfläche eines Topfes, der für das Bad mit der siedenden Flüssigkeit eingesetzt wird, wird vermieden.

Mit dem aus der DE 44 16 568 A1 bekannten Verfahren ist es möglich, gleichzeitig Eier zu färben als auch zu kochen. Die mittels diesem Verfahren erhaltenen Eier sind essbar. Unter einem gekochten Ei wird im Sinne der vorliegenden Erfindung ein Ei verstanden, dessen zumindest Eiweiß sich zu einem überwiegenden Anteil, bevorzugt zu mehr als 75 % verfestigt hat, weiter bevorzugt ein Ei, dessen Eiweiß und Eigelb verfestigt, das heißt hart ist. Dann wird im Sinne der vorliegenden Erfindung von einem hart gekochten Ei gesprochen.

Nachteilig an dem aus der DE 44 16 568 A1 bekannten Verfahren ist, dass gerade einige synthetische Farbstoffe, mittels welchen brilliante Farbeffekte und tiefe Färbungen erzielbar sind, nicht eingesetzt werden können, da diese nicht hinreichend auf der Eischale haften. Zudem ist nachteilig, dass bei Entnahme der Eier aus dem Topf beziehungsweise nachfolgend dem Abkühlen Abfärbungen an den Händen auftreten. Und schließlich erfolgt bei einer Vielzahl von einsetzbaren Lebensmittelfarbstoffen, insbesondere bei synthetischen Farbstoffen, eine relativ starke Einfärbung des Ei-Inneren, die zwar, da nur lebensmittelgerechte Farbstoffe eingesetzt werden, für den Esser nicht nachteilig ist, bei diesem jedoch aufgrund der dann nur geringen Ästhetik oftmals ein Verspeisen des Eis verhindern.

Es ist daher Aufgabe der vorliegenden Erfindung, ein neues Verfahren zur Behandlung von Eiern zur Verfügung zu stellen, welches die aus dem Stand der Technik bekannten Nachteile nicht aufweist.

Gemäß der vorliegenden Erfindung wird hierzu ein Verfahren zur Behandlung von Eiern vorgeschlagen, wobei
- über ein flächiges Material eine Oberfläche mindestens eines Eis mit mindestens einem Überzugsmittel, umfassend eine Lackkomponente, versehen wird;
- mindestens eine mit dem Überzugsmittel versehene Ei in ein Behältnis gegeben wird;
- in das Behältnis Wasser gegeben wird;
- in das Behältnis mindestens eine Farbstofflösung, umfassend mindestens einen Farbstoff, gegeben wird;
- mindestens eine anorganische und/oder organische Säure, ausgewählt aus einer Gruppe umfassend Salzsäure, Schwefelsäure, Phosphorsäure, Essigsäure, Milchsäure, Zitronensäure, Weinsäure, Äpfelsäure, Ascorbinsäure, Isoascorbinsäure, Fumarsäure, Adipinsäure, Bernsteinsäure und/oder Gluconsäure-5-Lacton, in das Behältnis gegeben wird;
- mindestens ein Behältnis in einen Behälter mit einer Flüssigkeit gegeben wird; und
- die Flüssigkeit erhitzt wird.

Mittels des erfindungsgemäßen Verfahrens wird vorteilhafterweise eine Anfärbung des Ei-Inneren im Färbevorgang so gut wie verhindert, zumindest dann, wenn eine Erhitzung der Flüssigkeit vorteilhafterweise solange erfolgt, bis das mindestens eine Ei hart gekocht ist. Vorteilhafterweise erfolgt die Erhitzung bei kochender Flüssigkeit über einen Zeitraum von nicht mehr als 15 Minuten, weiter bevorzugt nicht mehr als 12 Minuten, und damit mit 5 Minuten, bevorzugt mindestens 7 Minuten, jeweils auch abhängig von der Größe des Eis. Dabei können insbesondere auch synthetische Farbstoffe zum Einsatz kommen, welche mit den aus dem Stand der Technik bekannten Verfahren allein aus ästhetischen Gesichtspunkten aufgrund der starken Anfärbung des Ei-Inneren nicht einsetzbar waren. Zudem sind die mittels des erfindungsgemäßen Verfahrens erhaltenen Eier gut handhabbar, insbesondere erfolgt so gut wie keine Abfärbung des auf der Eischale befindlichen Farbstoffes.

Die einzelnen Schritte des erfindungsgemäßen Verfahrens können in beliebiger Reihenfolge vorgenommen werden. Es muss darauf geachtet werden, dass die Versehung der Eioberfläche mit einem Überzugsmittel vor Inkontaktbringung des Eis mit der Farbstofflösung erfolgt. Die im Behältnis, in welches das mindestens eine mit dem Überzugsmittel versehene Ei gegeben wird, vorliegende Mischung kann insbesondere in beliebiger Reihenfolge in dieses gegeben werden. Vorteilhafterweise wird jedoch zunächst Wasser in das Behältnis gegeben, und dann im Wasser die mindestens eine anorganische und/oder organische Säure und die mindestens eine Farbstofflösung zugegeben. Die mindestens eine anorganische und/oder organische Säure kann dabei in Pulverform oder aber in Lösung zugegeben werden. Die Farbstofflösung kann fest oder flüssig sein, insbesondere bei Raumtemperatur (20 °C bis 25 °C). Es kann auch vorgesehen sein, dass das mit dem Überzugsmittel versehene mindestens eine Ei in das Behältnis gegeben wird, und dann erst nachfolgend Wasser, Farbstofflösung und/oder die anorganische und/oder organische Säure, letztere als Mischungsbestandteile der im Behältnis vorliegenden Mischung in beliebiger Reihenfolge, zugegeben wird. Jedoch kann auch zunächst die Mischung im Behältnis hergestellt werden, und erst anschließend das mindestens eine mit einem Überzugsmittel versehene EI in das Behältnis gegeben werden. Es kann auch vorgesehen sein, dass das Ei erst dann in das Behältnis mit darin vorliegender Mischung gegeben wird, wenn die Flüssigkeit im Behälter, in welchem das Behältnis angeordnet wird, erhitzt ist oder aber zumindest erwärmt. Es kann jedoch auch vorgesehen sein, dass sowohl die im Behälter vorliegende Flüssigkeit als auch die im Behältnis vorliegende Mischung im nicht erwärmten beziehungsweise erhitzten Zustand vorliegen, und dann das Ei, versehen mit dem Überzugsmittel, in das Behältnis gegeben wird.

In einer besonders bevorzugten Ausführungsform des erfindungsgemäßen Verfahrens wird in einem ersten Schritt das mindestens eine Ei mit einem Überzugsmittel versehen, anschließend in einem Behältnis eine Mischung, die nicht erwärmt ist, hergestellt, umfassend Wasser, die mindestens eine Farbstofflösung und mindestens eine anorganische und/oder organische Säure, anschließend wird das mit dem Überzugsmittel versehene mindestens eine Ei in diese Mischung im Behältnis gegeben, und das Behältnis mitsamt Mischung und Ei anschließend in einen Behälter mit einer nicht erwärmten Flüssigkeit gegeben wird, die anschließend (ebenso wie die Mischung im Behältnis) erhitzt wird.

Die im Behältnis vorliegende Mischung kann im Übrigen auch weitere Substanzen enthalten, beispielsweise Pufferungsmittel, Siedepunkterhöher oder -erniedriger oder Färbehilfsmittel beziehungsweise Lösemittel wie beispielsweise Glykol oder sonstige Alkohole, je nach eingesetzter Farbstofflösung und Säure, wobei die weiteren Substanzen getrennt der Mischung zusetzbar sind, eben auch in der Farbstofflösung und/oder der Säure vorliegen können beziehungsweise mit dieser vermengt sind.

Die vom Überzugsmittel umfasste Lackkomponente ist besonders bevorzugt ausgewählt aus einer Gruppe umfassend Schellack und/oder Kopal und besonders bevorzugt Schellack. Besonders bevorzugt umfasst das Überzugsmittel weiterhin mindestens einen Alkohol, besonders bevorzugt Ethanol. Das Überzugsmittel kann weiterhin umfassen Lösemittel wie Wasser, zwei- oder dreiwertige Alkohole wie Glykol, Stabilisatoren, Emulgatoren et cetera. In einer besonders bevorzugten Ausführungsform ist das Überzugsmittel hergestellt aus Schellack als Lackkomponente, gelöst in Ethanol.

Das Versehen der Oberfläche des mindestens einen Eies mit einem Überzugsmittel unter Einsatz eines flächigen Materiales kann mehrfach erfolgen. Dabei kann zwischen einem ersten Versehen der Oberfläche mindestens eines Eis mit einem Überzugsmittel ein Trocknungsvorgang vor einer nachfolgenden erneuten Behandlung mit dem Überzugsmittel vorgesehen sein, wobei die Trocknung beispielsweise durch Luftanblasung oder Lagerung des Eis über einen kurzen Zeitraum erfolgt, damit flüchtige Bestandteile des Überzugsmittels entweichen kann. Die Trocknung kann dabei bei Raumtemperatur an der Umgebungsluft oder in einem höheren Temperaturbereich, beispielsweise in einem Trockenschrank, erfolgen.

In einer bevorzugten Ausführung des Verfahrens kann das flächige Material als ein Vlies ausgebildet werden, wobei zur Bildung des Vlieses bevorzugt vorwiegend natürliche Fasern und hierbei vorzugsweise Papierfasern genutzt werden können. Das Vlies kann auch unter Verwendung von synthetischen Fasern, vorzugsweise Polymerfasern und/oder Kombinationen aus natürlichen und synthetischen Fasern ausgebildet werden.

Das flächige Material weist dabei vorzugsweise einen flexiblen Charakter auf, das heißt es hat gute Griffeigenschaften und lässt sich durch den Benutzer ausgezeichnet handhaben, indem das Ei mit dem flächigen Material umhüllt werden kann, in diesem gerollt werden kann oder das flächige Material in zusammengelegter Form zur Betupfung des Eies genutzt werden kann.

Zur Herstellung eines Vlieses auf Polymerbasis können jegliche fadenbildenden Polymere, die in ihrer Schmelze oder Lösung Eigenschaften aufweisen, welche die Bedingungen der Verspinnbarkeit erfüllen, eingesetzt werden. Beispielsweise sind Polymere aus der Gruppe der Polyolefine als Homopolymere oder Blends, Polyamide, Polyester, abbaubare Polymere, beispielsweise auf Polymilchsäurebasis oder Stärkebasis, zur Herstellung dieser Vliese geeignet. Als natürliche Fasern werden Fasern, vorwiegend umfassend Cellulose, Baumwolle, Leinen, Flachs oder Alginate bevorzugt.

Als vorteilhaft für die Behandlung von Eiern haben sich beispielsweise
- Vliese mit einem überwiegenden Anteil an Papierfasern,
- Vliese auf Polyolefinbasis unter Verwendung von Hydrophilierungsmitteln oder
- Vliese auf Polymerbasis mit einem Anteil an natürlichen Fasern
erwiesen.

Verfahrensgemäß kann das flächige Material auch ein- oder mehrlagig ausgebildet werden.

Als einlagig ausgebildete Materialien können beispielsweise Filterpapiere oder Vliesstoffe aus Fasern und/oder Filamenten, aus Stapel- oder Endlosfäden, die beispielsweise nach einem Spunbondverfahren oder Meltblownverfahren oder Kardierverfahren oder einem Nassspinnverfahren erzeugt worden sind, zur Herstellung des erfindungsgemäßen flächigen Materials für die Behandlung von Eiern verwendet werden.

Mehrlagige Vliese können beispielsweise auf Polymerbasis ausgebildet werden, wobei zudem Zwischenlagen ausgebildet werden können, die überwiegend oder vollständig aus natürlichen Fasern ausgebildet worden sind. Andererseits kann eine Lage eines Vlieses, welche überwiegend oder vollständig aus natürlichen Fasern gebildet wird, in einem flächigen Material auch als eine Außenlage eines mehrlagigen Gebildes in Form eines Laminats angeordnet werden. Alternativ zu Vliesstoffen oder Lagen aus Papier sind auch poröse Filmschichten zur Herstellung von mehrschichtigen flächigen Materialien möglich. Übliche Flächengewichte der Vliese oder Filterpapiere können zwischen 10 g/m² bis 200 g/m² liegen, wobei mehrlagige Gebilde in separaten Verarbeitungsprozessen oder in einem Verarbeitungsprozess, beispielsweise inline, erzeugt werden können. Die Faser- oder Filamentdurchmesser können im Bereich von weniger als 0,001 mm bis mehr als 0,2 mm liegen, wobei die Faserquerschnitte rund, nichtrund, beispielsweise elliptisch, rechteckig, vieleckig oder multilobal, vorzugsweise trilobal ausgebildet werden können. Die Fasern und/oder Filamente können als Monofilamente oder Mehrkomponentenfilamente ausgebildet werden. Die Bindung der Fasern innerhalb des Vlieses kann durch Thermobonding, adhäsives Bonding, beispielsweise mittels Schmelzkleber oder Vernadelung, Wasserstrahlverfestigung und dergleichen erfolgen.

Sowohl die Gestaltung der Faserquerschnitte, der Dicke und des Lagenaufbaues des flächigen Materiales als auch die Kombination von natürlichen und synthetischen Fasern haben in Bezug auf eine Erhöhung der Aufnahmefähigkeit und des Rückhaltevermögens des flächigen Materials für das mindestens eine Überzugsmittel einen Einfluss. So kann ein leicht handhabbares Vlies zur Verfügung gestellt werden. Zugleich kann ein Abtropfen des im Vlies vorhandenen überschüssigen Überzugmittels vermieden werden, so dass das Vlies mehrfach zur Behandlung von Eiern verwendet werden kann, ohne dass das Überzugsmittel auf die Hände des Benutzers gelangt.

Das flächige Material kann auch aus unterschiedlichen Materialien hergestellt sein und beispielsweise eine Kaschierung auf einer Seite mit einer überzugsmittelundurchlässigen Folie oder einem Film aufweisen, so dass sichergestellt ist, dass bei richtiger Anwendung des flächigen Materials die Hände des Anwenders sauber bleiben. Dies kann auch erreicht werden durch Versehung des flächigen Materials nur auf einer Seite desselben mit mindestens einem Überzugsmittel und einer Einstellung der Vlieseigenschaften dergestalt, dass das Färbemittel und/oder Überzugsmittel nicht bis auf die andere Seite des flächigen Materials durchdringt.

Erfindungsgemäß wird die Oberfläche des mindestens einen Eies vollständig mit dem Überzugsmittel versehen. Es ist jedoch im Sinne der vorliegenden Erfindung auch möglich, nur einen Teil der Oberfläche zumindest eines Eis mit dem mindestens einen Überzugsmittel zu versehen, wobei jedoch dann in Kauf genommen werden muss je nach eingesetzter Farbstofflösung eine Anfärbung des Ei-Inneren, als auch - was jedoch gewünscht sein kann - unterschiedliche Farbintensitäten in den betreffenden mit einem Überzugsmittel und nicht mit einem Überzugsmittel versehenen Bereichen der Oberfläche des Eies.

Das flächige Material, versehen mit dem mindestens einen Überzugsmittel, wird vorteilhafterweise in einer Verpackung zur Verfügung gestellt, weiche eine Entweichung des Überzugsmittels durch Verdampfen flüchtiger Bestandteile wie insbesondere in diesem enthaltene Alkohole verhindert. Erfindungsgemäß liegt das Gewichtsverhältnis des flächigen Materiales zu dem des mindestens einen Überzugsmittels, welches auf das flächige Material gegeben wird, in einem Bereich von etwa 0,5 bis etwa 5, vorzugsweise etwa 1 bis etwa 4,5, besonders bevorzugt etwa 2 bis etwa 4.

Das Behältnis, in welches das mindestens eine mit mindestens einem Überzugsmittel versehene Ei gegeben wird, ist vorteilhafterweise als Beutel ausgebildet. Der Beutel ist dabei aus einem Material hergestellt, was eine hinreichende Wärme- beziehungsweise Hitzebeständigkeit aufweist, insbesondere in Hinblick darauf, dass besonders bevorzugt der Färbevorgang als auch der Kochvorgang des Eis gleichzeitig erfolgt, und daher bei Einsatz von Wasser als Flüssigkeit im Behälter Temperaturen von etwa 100 °C herrschen können, bei Einsatz anderer Flüssigkeiten sogar höhere Temperaturen. Diese Temperaturen muss das Material des Behältnisses, insbesondere wenn dieses als Folienbeutel ausgestaltet ist, ohne das es zu einer Porosität kommt, standhalten können. Vorteilhafterweise ist das Behältnis aus einem Kunststoffmaterial hergestellt, vorzugsweise aus einem Polyethylen und/oder Polypropylen, besonders bevorzugt aus einem High-Density-Polyethylen (HDPE), insbesondere in Form eines Folienbeutels.

Erfindungsgemäß wird in einer bevorzugten Ausführungsform das Behältnis verschlossen. Der hierdurch erzielte Verschluss ist weiter vorteilhafterweise dampfdurchlässig ausgestaltet. Der Verschluss kann beispielsweise erfolgen durch einen Clip, wie dieser in der DE 44 16 568 A1 offenbart ist. Es ist jedoch auch möglich, beispielsweise bei Ausgestaltung des Behältnisses als Folienbeutel, dieses durch einen lockeren Knoten zu verschließen, der noch hinreichend dampfdurchlässig ist. Aber auch jede andere Art der Herstellung eines Verschlusses, der Dampf durchlässt, ist im Sinne der vorliegenden Erfindung möglich.

Erfindungsgemäß erfolgt die Erhitzung der Flüssigkeit im Behälter solange, bis das mindestens eine Ei in mindestens am Behältnis gekocht ist.

Erfindungsgemäß weist das flächige Material mindestens ein Überzugsmittel auf, umfassend mindestens eine Lackkomponente, vorzugsweise Schellack und/oder Kopal, in einer Menge in einem Bereich zwischen etwa 2 Gew.-% bis etwa 30 Gew.-%, und mindestens ein alkoholbasiertes Lösemittel, vorzugsweise Ethanol, in einer Menge in einem Bereich zwischen etwa 70 Gew.-% bis etwa 98 Gew.-%. Die vorgenannten Gewichtsprozentbereiche sind jeweils bezogen auf die Gesamtmenge des Überzugsmittels. Auch weitere Bestandteile können von diesem umfasst sein.

Vorteilhafterweise ist der mindestens eine Farbstoff, der von der Farbstofflösung umfasst ist, ausgewählt aus einer Gruppe umfassend Patentblau V (E 131), Lissamingrün (E 142), Lactoflavin-1-Phosphat (E 101 a), Curcumin (E100), Gelborange S (E 110), Riboflavin (E101) und/oder Erythrosin (E 127). Mit den genannten Farbstoffen lassen sich mit dem erfindungsgemäßen Verfahren brilliante Färbungen erzielen, ohne dass das sonst bei diesen Farbstoffen übliche Anfärben des Ei-Inneren bei dem erfindungsgemäßen Verfahren erfolgt Der Farbstoff Curcumin ist ein natürlicher Farbstoff, die anderen genannten Farbstoffe sind synthetische Farbstoffe. Sämtliche der genannten Farbstoffe sind als Lebensmittelfarbstoffe zugelassen. Besonders bevorzugt ist der von der Farbstofflösung umfasste mindestens eine Farbstoff gelöst in einem Lösemittel, ausgewählt aus einer Gruppe umfassend Glycerin, Wasser und/oder Alkohole. Besonders bevorzugt ist der Farbstoff gelöst in Ethanol und/oder Wasser, insbesondere auch in Mischungen von Ethanol mit Wasser. Vorteilhafterweise umfasst die Farbstofflösung überwiegend Glycerin, das auch als Konservierungsmittel dient. Aber auch andere Alkohole wie Glykol oder hierzu ähnlich können eingesetzt werden. Zudem kann die Farbstofflösung noch weiterhin Stabilisatoren, Antioxidantien, Verdickungsmittel, weitere Konservierungsmittel, etc. aufweisen.

Besonders vorteilhafte Farbstofflösungen umfassen den mindestens einen Farbstoff in einer Menge von etwa 0,3 Gew.-% bis etwa 10 Gew.-%, bevorzugt in einer Menge von etwa 0,45 Gew.-% bis etwa 8,5 Gew.-%. Die Farbstofflösung umfasst vorteilhafterweise Glycerin in einer Menge in einem Bereich zwischen etwa 45 Gew.-% und etwa 85 Gew.-%, weiter bevorzugt in einem Bereich von etwa 50 Gew.-% bis etwa 80 Gew.-%. Die Farbstofflösung umfasst vorteilhafterweise Wasser in einer Menge in einem Bereich von etwa 15 Gew.-% bis etwa 30 Gew.-%, weiter bevorzugt in einer Menge in einem Bereich von etwa 18 Gew.-% bis etwa 28 Gew.-%. Soweit der eingesetzte Farbstoff bei Raumtemperatur (25 °C) alkohollöslich ist, das heißt insbesondere in Ethanol, umfasst die Farbstofflösung vorteilhafterweise weiterhin etwa 15 Gew.-% bis etwa 25 Gew.-% mindestens eines Alkohols, bevorzugt Ethanol, weiter bevorzugt mindestens einen Alkohol in einer Menge von etwa 17 Gew.-% bis etwa 23 Gew.-%. Die genannten Gewichtsprozente sind jeweils bezogen auf das Gesamtgewicht der eingesetzten Farbstofflösungen. Dabei kann insbesondere auch vorgesehen sein, dass dieser zwei Farbstoffe umfasst, beispielsweise Riboflavin und Gelborange S.

Weiter vorteilhafterweise liegt die Säurekonzentration in dem mindestens einen Behältnis in einem Bereich von etwa 2,5 mmol/l bis 30 mmol/l, weiter bevorzugt in einem Bereich zwischen etwa 4 mmol/l bis etwa 23 mmol/l. Zur Verfügung gestellt wird die mindestens eine anorganische und/oder organische Säure vorteilhafterweise in Lösung, wobei die Lösung die Säure vorzugsweise vorteilhafterweise in einem Bereich von etwa 2%ig bis etwa 10%ig eingestellt ist Besonders bevorzugt im Sinne der vorliegenden Erfindung wird eine organische Säure eingesetzt, ausgewählt aus einer Gruppe umfassend Milchsäure, Essigsäure, Zitronensäure, Äpfelsäure, Ascorbinsäure, isoascorbinsäure und/oder Fumarsäure, wobei besonders bevorzugt Milchsäure, Essigsäure und/oder Zitronensäure, ist und noch weiter bevorzugt die eingesetzte Säure Milchsäure ist. Vorteilhafterweise liegt die Konzentration von Milchsäure im Behältnis in einem Bereich von etwa 8 mmol/l bis etwa 16 mmol/l, weiter bevorzugt in einem Bereich von etwa 10 mmol/l bis etwa 15 mmol/l. Vorteilhafterweise kann im Sinne der vorliegenden Erfindung auch eine Mischung von mindestens zwei Säuren, bevorzugt mindestens zwei organischen Säuren, eingesetzt werden. Besonders bevorzugt sind dabei Mischungen von Milchsäure mit einer weiteren organischen Säure, wobei diese weitere organische Säure vorteilhafterweise ausgewählt ist aus einer Gruppe umfassend Essigsäure, Zitronensäure, Äpfelsäure und/oder Fumarsäure.

Durch den Zusatz der mindestens einen anorganischen und/oder organischen Säure wird, so vermuten die Erfinder, wohl eine gewisse Gängigkeit des eingesetzten Farbstoffes oder der Mischung von Farbstoffen durch die durch das Überzugsmittel geschaffene Schicht auf der Oberfläche der Eischale zur Verfügung gestellt, und gleichzeitig eine festere Bindung des Farbstoffes an der Oberfläche der Schale des Eies vermittelt, so dass einerseits eine Anfärbung des Ei-Inneren so gut wie möglich vermieden wird, andererseits das Überzugsmittel schützend oberhalb des Farbstoffes angeordnet ist, so dass auch das nachfolgende in die Handnehmen des Eis nicht zu Abfärbungen des Farbstoffes auf die Hände des Benutzers führt.

In einer vorteilhaften Ausgestaltung des erfindungsgemäßen Verfahrens wird der pH-Wert der im Verhältnis vorliegenden Mischung in einem Bereich von etwa 3 bis etwa 6, vorteilhafterweise in einem Bereich von etwa 4 bis etwa 5,8 vor Beginn des Färbevorgangs, und insbesondere vor Beginn des Erhitzens, eingestellt. Der pH-Wert nach Abschluss des Färbevorgangs liegt bei einer Erhitzung bis zum Erhalt von hart gekochten Eiern vorteilhafterweise in einem Bereich von etwa 4,8 bis etwa 6,5, weiter bevorzugt in einem Bereich von etwa 5,2 bis etwa 6.

Die vorliegende Erfindung betrifft weiterhin ein System zur Behandlung von Eiern zur Durchführung des erfindungsgemäßen Verfahrens, umfassend
- mindestens ein Behältnis;
- mindestens ein flächiges Material, versehen mit einem Überzugsmittel, umfassend eine Lackkomponente;
- mindestens eine Farbstofflösung, umfassend mindestens einen Farbstoff; sowie
- mindestens eine anorganische und/oder organische Säure, ausgewählt aus einer Gruppe umfassend Salzsäure, Schwefelsäure, Phosphorsäure, Essigsäure, Milchsäure, Zitronensäure, Weinsäure, Äpfelsäure, Ascorbinsäure, Isoascorbinsäure, Fumarsäure, Adipinsäure, Bernsteinsäure und/oder Gluconsäure-5-Lacton.

Vorteilhafterweise liegt in dem erfindungsgemäßen System die mindestens eine anorganische und/oder organische Säure in Lösung, insbesondere in wässriger Lösung, in einer Konzentration in einem Bereich von etwa 2 % bis etwa 12%, weiter bevorzugt in einem Bereich von etwa 3 % bis etwa 10 %, vor. Weiter bevorzugt ist bei dem erfindungsgemäßen System die mindestens eine Farbstofflösung und/oder die mindestens eine anorganische und/oder organische Säure in Mischung oder getrennt zur Verfügung gestellt. Besonders bevorzugt ist eine Zurverfügungstellung der mindestens einen Farbstofflösung und der mindestens einen anorganischen und/oder organischen Säure in getrennten Behältnissen. Zusätzlich kann dem erfindungsgemäßen System auch mitgegeben werden ein Zusatz zur Erniedrigung des Dampfdruckes der Flüssigkeit, die im Behälter vorliegt. Als Behälter wird üblicherweise ein Kochtopf oder Ähnliches im Sinne der vorliegenden Erfindung eingesetzt. Als Dampfdruck reduzierender Zusatz kann bei Verwendung von Wasser als Flüssigkeit beispielsweise Kochsalz eingesetzt werden. Hierdurch wird letztendlich eine Temperaturerhöhung der Siedeflüssigkeit während der Kochzeit erreicht, so dass sich die Kochzeit verkürzt.

Die vorliegende Erfindung wird anhand des folgenden Ausführungsbeispieles erläutert:
Es wird eine orangefarbende Farbstofflösung hergestellt aus einer Mischung von 70 Gew.-% Glycerin als Löse- (und Konservierungs-) mittel, 22 Gew.-% Wasser, 2 Gew.-% Riboflavin (E 101) und 6 Gew.-% Gelborange S (E 110). Weiterhin wurde eine 8%ige Lösung Milchsäure in Wasser, hergestellt aus 90 Gew.-% Wasser und 10 Gew.-% 80%iger Milchsäure, hergestellt.

In einen Folienbeutel aus High Density Polyethylen wurden 300 ml Wasser, 2,5 ml der genannten Milchsäurelösung und 5 ml der genannten orangefarbenen Färbelösung gegeben. In diese Lösung wurde ein ungekochtes Ei gegeben, welches vorher mit einem Vliestuch als flächiges Material, versehen mit einem Überzugsmittel, hergestellt aus 20 Gew.-% Schellack und 80 Gew.-% Ethanol, wobei die Gewichtsprozente bezogen sind auf das Überzugsmittel, und wobei das Gewichtsverhältnis zwischen flächigem Material und dem Überzugsmittel etwa 2:1 beträgt, einmalig behandelt, so dass die Oberfläche der Eischale vollständig mit dem Überzugsmittel versehen war. Vor Einlegung des rohen, mit dem Überzugsmittel versehenen Eis in das Behältnis mit der Mischung wurde das Ei noch kurz für etwa 30 Sekunden bei Raumtemperatur getrocknet.

Der Beutel mit dem Ei wurde in einen üblichen Kochtopf gegeben, in welchem Wasser bei Raumtemperatur vorlag. Das Wasser wurde in dem Kochtopf dann erhitzt, und nach Erreichen der Siedetemperatur wurde die Erhitzung bei kochendem Wasser für etwa 10 Minuten fortgesetzt, so dass letztendlich ein hart gekochtes Ei erhalten wurde. Dieses wies eine brilliante orange Färbung auf und konnte nach Abkühlen so gut wie ohne Übertragung jeglicher Farbstoffanteile auf die Hand des Benutzers von diesem in die Hand genommen werden. Auch wies das solchermaßen gekochte Ei keine Anfärbung des Ei-Inneren auf.

## Patentansprüche

1. Verfahren zur Behandlung von Eiern, wobei
- über ein flächiges Material eine Oberfläche mindestens eines Eis mit mindestens einem Überzugsmittel, umfassend eine Lackkomponente, versehen wird;
- dass mindestens eine mit dem Überzugsmittel versehene Ei in ein Behältnis gegeben wird;
- in das Behältnis Wasser gegeben wird;
- in das Behältnis mindestens eine Farbstofflösung, umfassend mindestens einen Farbstoff, gegeben wird;
- mindestens eine anorganische und/oder organische Säure, ausgewählt aus einer Gruppe umfassend Salzsäure, Schwefelsäure, Phosphorsäure, Essigsäure, Milchsäure, Zitronensäure, Weinsäure, Äpfelsäure, Ascorbinsäure, Isoascorbinsäure, Fumarsäure, Adipinsäure, Bernsteinsäure und/oder Gluconsäure-5-Lacton, in das Behältnis gegeben wird;
- mindestens ein Behältnis in einen Behälter mit einer Flüssigkeit gegeben wird; und
- die Flüssigkeit erhitzt wird.

2. Verfahren gemäß Anspruch 1, **dadurch gekennzeichnet, dass** die Erhitzung solange erfolgt, bis das mindestens eine Ei gekocht ist.

3. Verfahren gemäß einem der vorhergehenden Ansprüche, **dadurch gekennzeichnet, dass** das mindestens eine Behältnis verschlossen wird.

4. Verfahren gemäß Anspruch 3, **dadurch gekennzeichnet, dass** der Verschluss dampfdurchlässig ist.

5. Verfahren gemäß einem der vorhergehenden Ansprüche, **dadurch gekennzeichnet, dass** die Lackkomponente ausgewählt aus einer Gruppe umfassend Schellack und/oder Kopal.

6. Verfahren gemäß einem der vorhergehenden Ansprüche, **dadurch gekennzeichnet, dass** das Überzugsmittel mindestens einen Alkohol umfasst.

7. Verfahren gemäß einem der vorhergehenden Ansprüche, **dadurch gekennzeichnet, dass** die Oberfläche des mindestens einen Eis vollständig mit dem Überzugsmittel versehen wird.

8. Verfahren gemäß einem der vorhergehenden Ansprüche, **dadurch gekennzeichnet, dass** der mindestens eine Farbstoff ausgewählt ist aus einer Gruppe umfassend Patentblau V (E 131), Lissamingrün (E 142), Lactoflavin-1-Phosphat (E 101a), Curcumin (E 100), Gelborange S (E 110), Riboflavin (E 101) und/oder Erythrosin (E 127).

9. Verfahren gemäß einem der vorhergehenden Ansprüche, **dadurch gekennzeichnet, dass** die Säurekonzentration im mindestens einen Behältnis in einem Bereich von etwa 2,5 mmol/l bis etwa 30 mmol/l eingestellt wird.

10. Verfahren gemäß einem der vorhergehenden Ansprüche, **dadurch gekennzeichnet, dass** der pH-Wert der im Behältnis vorliegenden Mischung in einem Bereich von etwa 3 bis etwa 6 vor Beginn des Erhitzens eingestellt wird.

11. System zur Behandlung von Eiern zur Durchführung des Verfahrens gemäß einem der Ansprüche 1 bis 10, umfassend
- mindestens ein Behältnis;
- mindestens ein flächiges Material, versehen mit einem Überzugsmittel, umfassend eine Lackkomponente;
- mindestens eine Farbstofflösung, umfassend mindestens einen Farbstoff; sowie
- mindestens eine anorganische und/oder organische Säure, ausgewählt aus einer Gruppe umfassend Salzsäure, Schwefelsäure, Phosphorsäure, Essigsäure, Milchsäure, Zitronensäure, Weinsäure, Äpfelsäure, Ascorbinsäure, Isoascorbinsäure, Fumarsäure, Adipinsäure, Bernsteinsäure und/oder Gluconsäure-5-Lacton.

12. System gemäß Anspruch 11, **dadurch gekennzeichnet, dass** die mindestens eine anorganische und/oder organische Säure in wässriger Lösung vorliegt.

13. System gemäß Anspruch 12, **dadurch gekennzeichnet, dass** die Lösung etwa 2%ig bis etwa 12%lg ist.

14. System gemäß einem der Ansprüche 11 bis 13, **dadurch gekennzeichnet, dass** die mindestens eine Farbstofflösung und/oder die mindestens eine anorganische und/oder organische Säure in Mischung oder getrennt zur Verfügung gestellt ist.

## Claims

1. Method for treating eggs, wherein
- a surface of at least one egg is provided with at least one coating agent, comprising a varnish component, by means of a sheet material;
- the at least one egg provided with the coating agent is placed in a container;
- water is placed in the container;
- at least one dye solution, comprising at least one dye, is placed in the container;
- at least one inorganic and/or organic acid, selected from a group comprising hydrochloric acid, sulphuric acid, phosphoric acid, acetic acid, lactic acid, citric acid, tartaric acid, malic acid, ascorbic acid, isoascorbic acid, fumaric acid, adipic acid, succinic acid and/or gluconic acid-5-lactone, is placed in the container;
- at least one container is placed in a receptacle with a liquid; and
- the liquid is heated.

2. Method according to claim 1, **characterised in that** the heating takes place until the at least one egg is boiled.

3. Method according to any one of the preceding claims, **characterised in that** the at least one container is closed.

4. Method according to claim 3, **characterised in that** the closure is vapour-permeable.

5. Method according to any one of the preceding claims, **characterised in that** the varnish component is selected from a group comprising shellac and/or copal.

6. Method according to any one of the preceding claims, **characterised in that** the coating agent comprises at least one alcohol.

7. Method according to any one of the preceding claims, **characterised in that** the surface of the at least one egg is completely provided with the coating agent.

8. Method according to any one of the preceding claims, **characterised in that** the at least one dye is selected from a group comprising patent blue V(E 131), lissamine green (E 142), lactoflavin-1-phosphate (E 101a), curcumin (E 100), sunset yellow S (E 110), riboflavin (E101) and/or erythrosine (E 127).

9. Method according to any one of the preceding claims, **characterised in that** the acid concentration in the at least one container is adjusted within a range of about 2.5 mmol/l to about 30 mmol/l.

10. Method according to any one of the preceding claims, **characterised in that** the pH of the mixture present in the container is adjusted within a range of about 3 to about 6 before the beginning of heating.

11. System for treating eggs for carrying out the method according to any one of claims 1 to 10, comprising
- at least one container;
- at least one sheet material, provided with a coating agent, comprising a varnish component;
- as least one dye solution, comprising at least one dye; and
- at least one inorganic and/or organic acid, selected from a group comprising hydrochloric acid, sulphuric acid, phosphoric acid, acetic acid, lactic acid, citric acid, tartaric acid, malic acid, ascorbic acid, isoascorbic acid, fumaric acid, adipic acid, succinic acid and/or gluconic acid-5-lactone;

12. System according to claim 11, **characterised in that** the at least one inorganic and/or organic acid is present in aqueous solution.

13. System according to claim 12, **characterised in that** the solution is about 2% to about 12%.

14. System according to any one of claims 11 to 13, **characterised in that** the at least one dye solution and/or the at least one inorganic and/or organic acid is provided in a mixture or separately.

## Revendications

1. Procédé de traitement des oeufs, dans lequel :
• une couche d'au moins un matériau de revêtement incluant une laque est appliquée sur au moins une partie d'au moins un oeuf à l'aide d'un matériau en feuille;
• au moins un oeuf ainsi traité est placé dans un contenant ;
• de l'eau est versée dans le contenant ;
• au moins une solution colorante avec au moins un colorant est versée dans le contenant ;
• au moins un acide organique et/ou inorganique sélectionné dans un groupe comprenant les acides chlorhydriques, sulfuriques, phosphoriques, acétiques, lactiques, citriques, tartriques, maliques, ascorbiques, isoascorbiques, fumariques, adipiques, succiniques et/ou gluconiques-S-lactoniques est versé dans le contenant ;
• l'au moins un contenant est placé dans un récipient avec un liquide ;
• et ce liquide est chauffé.

2. Procédé selon la revendication 1 **caractérisé en ce que** le temps de chauffage est suffisant pour cuire l'au moins un oeuf.

3. Procédé selon l'une quelconque des revendications précédentes **caractérisé en ce que** l'au moins un contenant est fermé.

4. Procédé selon la revendication 3, **caractérisé en ce que** la fermeture laisse passer la vapeur.

5. Procédé selon l'une quelconque des revendications précédentes, **caractérisé en ce que** la laque est sélectionnée dans un groupe comprenant les gommes-laques et le copal.

6. Procédé selon l'une quelconque des revendications précédentes, **caractérisé en ce que** le revêtement contient au moins un alcool.

7. Procédé selon l'une quelconque des revendications précédentes, **caractérisé en ce que** la surface extérieure de l'au moins un oeuf est complètement couverte avec le matériau de revêtement.

8. Procédé selon l'une quelconque des revendications précédentes, **caractérisé en ce que** l'au moins un colorant est sélectionné dans un groupe comprenant le bleu patenté V (E131), le vert brillant BS (E142), le phosphate sodique de riboflavine (E101a), la curcumine (E100), le jaune orangé S (E110), la riboflavine (E101) et/ou l'érythrosine (E127).

9. Procédé selon l'une quelconque des revendications précédentes, **caractérisé en ce que** la concentration en acide dans l'au moins un contenant se situe dans une fourchette allant d'environ 2,5mmol/l à environ 30mmol/l.

10. Procédé selon l'une quelconque des revendications précédentes, tel que le pH du liquide dans l'au moins un contenant est situé entre environ 3 et environ 6.

11. Dispositif pour le traitement des oeufs selon le procédé décrit par au moins l'une des revendications 1 à 10, comprenant :
• au moins un contenant;
• au moins un matériau en feuille, muni d'au moins un matériau de revêtement comprenant une laque ;
• au moins une solution colorante comprenant au moins un colorant et
• au moins un acide organique et/ou inorganique sélectionné dans un groupe comprenant les acides chlorhydriques, sulfuriques, phosphoriques, acétiques, lactiques, citriques, tartriques, maliques, ascorbiques, isoascorbiques, fumariques, adipiques, succiniques et/ou gluconiques-S-lactoniques.

12. Dispositif selon la revendication 11, **caractérisé en ce que** l'au moins un acide organique et/ou inorganique est en solution aqueuse.

13. Dispositif selon la revendication 12, **caractérisé en ce que** la solution est comprise entre environ 2% et environ 12%.

14. Dispositif selon au moins l'une quelconque des revendications 11 à 13 **caractérisé en ce que** l'au moins une solution colorante et l'au moins une solution acide organique ou inorganique sont mises à disposition mélangées ou séparées.
